# EUROPEAN PATENT APPLICATION

(11) **EP 4 309 833 A1**
(43) Date of publication of application: **24.01.2024**
(21) Application number: 23186025.5
(22) Date of filing: 18.07.2023
(51) Int. Cl.: B23B 3/32, B23B 9/00, B23B 9/08, B23B 25/04, B23Q 5/34, B23Q 11/00, B23Q 11/08, B23Q 39/04

(54) **A DOUBLE MULTI-SPINDLE LATHE**

(30) Priority: 21.07.2022 IT 202200015357
(71) Applicant: PAOLINO BACCI S.R.L., 56021 Cascina (PI) (IT)
(72) Inventor: BACCI, Giuseppe, 56025 Pontedera (Pi) (IT); BACCI, Paolo, 56025 Pontedera (Pi) (IT); BACCI, Nino, 56025 Pontedera (Pi) (IT)
(74) Representative: Mannucci, Michele

(57) **Abstract**

The multi-spindle lathe comprises a base (9) extending along a first translation axis (X), to which a first series of rotation members (13, 15) for workpieces (P) is associated, rotatable around respective rotation axes (A) parallel to the first translation axis (X) and a second series of rotation members (13A, 15A) for workpieces (PA), rotatable around respective rotation axes (A). The lathe further comprises a first carriage (23) movable on first guides (21) integral with the base (9) and extending in the direction of the first translation axis (X) and a plurality of spindles (31) with parallel axes, carried by the first carriage (23). The first series of rotation members (13, 15) and the second series of rotation members (13A, 15A) are arranged in sequence along the first translation axis (X). The first carriage (23) and the first guides (21) are configured to selectively machine: workpieces (P) mounted on the first series of rotation members (13, 15); and workpieces (PA) mounted on the second series of rotation members (13A, 15A).

## Description

### TECHNICAL FIELD

The present invention relates to the field of machine tools. More in particular, the invention relates to the field of numerical control lathes. Embodiments described herein relate to multi-spindle lathes, i.e., lathes in which a plurality of spindles simultaneously machine a plurality of workpieces kept in rotation by multiple rotation members.

### BACKGROUND ART

To produce elongated workpieces, such as components of furniture or other, in wood, plastic, light alloys or the like, the use of numerical control lathes and copy lathes is known. In particular, to produce furniture components, such as chair and table legs, multi-spindle copy lathes are known, in which it is possible to simultaneously machine a plurality of workpieces supported by a plurality of headstocks and tailstocks. The tools which machine the plurality of workpieces in parallel are controlled by means of a template, which reproduces the shape of the workpiece to be produced.

These machines are reliable and precise, but have limitations deriving from their nature of being copy machines, i.e., requiring the use of templates, which reproduce the shape of the finished workpiece.

EP-A-3858542 discloses a numerical control multi-spindle lathe comprising a base extending along a first translation axis and a series of rotation members on which to support the workpieces. The rotation members are rotatable around respective rotation axes parallel to the first translation axis. The lathe further comprises a first carriage movable on first guides integral with the base and extending in the direction of the first translation axis. The first carriage is provided with a numerically controlled movement along the first translation axis to machine the workpieces mounted on the rotation members. A plurality of spindles with parallel axes, carried by the first carriage and adapted to support and rotate tools, are configured to simultaneously machine workpieces mounted on the rotation members.

The work cycle performed by the multi-spindle lathe of the current art comprises the following steps: opening the protections surrounding the working area of the multi-spindle lathe; removing workpieces machined in the previous cycle, if any; loading and locking the workpieces to be machined on the rotation members; starting the rotation of the rotation members and the spindles with the respective tools; machining the workpieces; stopping the spindles and tools as well as the rotation members and machined workpieces. The aforesaid operations are normally performed manually, but can in theory be automated. In any case, however, the operations require quite a long time during which the multi-spindle lathe is stopped to allow the machined workpieces to be unloaded and new workpieces to be loaded for the next cycle. This negatively affects the productivity of the multi-spindle lathe.

Therefore, there is a need to provide a more efficient multi-spindle lathe with greater productivity.

### SUMMARY

According to one aspect, a numerical control multi-spindle lathe is disclosed, comprising a base extending along a first translation axis and a first series of rotation members for workpieces, rotatable around respective rotation axes parallel to the first translation axis. A first carriage is movable on first guides integral with the base, i.e., stationary with respect to the base, which extend in the direction of the first translation axis. The first carriage is provided with a numerically controlled movement along the first translation axis. A plurality of spindles with parallel axes are carried by the first carriage and adapted to receive and rotate tools configured to simultaneously machine workpieces supported by the first series of rotation members. The lathe also advantageously has a second series of rotation members for the workpieces, rotatable around respective rotation axes. The rotation axes of the second series of rotation members are parallel to the rotation axes of the first series of rotation members. The rotation axes of the second series are preferably coincident with the rotation axes of the first series. The first series of rotation members and the second series of rotation members are arranged in sequence along the first translation axis. Furthermore, the first carriage and the first guides are configured to selectively machine: workpieces mounted on the first series of rotation members; and workpieces mounted on the second series of rotation members.

The machine thus configured can achieve high autonomy even in less manned configurations, i.e., with less support from staff assigned to manage the machine.

Further advantageous features and embodiments of the lathe according to the invention are described below with reference to an exemplary embodiment, and are defined in the attached claims.

In the present description, unless otherwise specified, the terms "vertical" and "horizontal" refer to the position taken by respective members when the multi-spindle lathe is in the working position. "Vertical" means a direction parallel to the direction of the force of gravity and "horizontal" means a direction orthogonal to the vertical direction.

### BRIEF DESCRIPTION OF THE DRAWINGS

The invention will be better understood by following the description and accompanying drawings, which illustrate an exemplary and non-limiting embodiment of the invention. More specifically, the drawings show in:
Fig.1 a front view, according to I-I of Fig.2, of a multi-spindle lathe in a first embodiment;
Fig.2 a section according to II-II of Fig. 1;
Fig.3 a plan view according to III-III of Fig. 1;
Fig.4 a view according to IV-IV of Fig.3;
Fig.5 a front view, according to V-V of Fig.6, of a multi-spindle lathe in a second embodiment;
Fig.6 a section according to VI-VI of Fig.5;
Fig.7 a plan view according to VII-VII of Fig.5;
Fig.8 a view according to VIII-VIII of Fig.5;
Fig.9 a side view of a further embodiment of a multi-spindle lathe, according to IX-IX of Figures 10 and 11:
Fig. 10 a section according to X-X of Figures 9 and 11; and
Fig.11 a plan view according to XI-XI of Figures 9 and 10.

### DETAILED DESCRIPTION

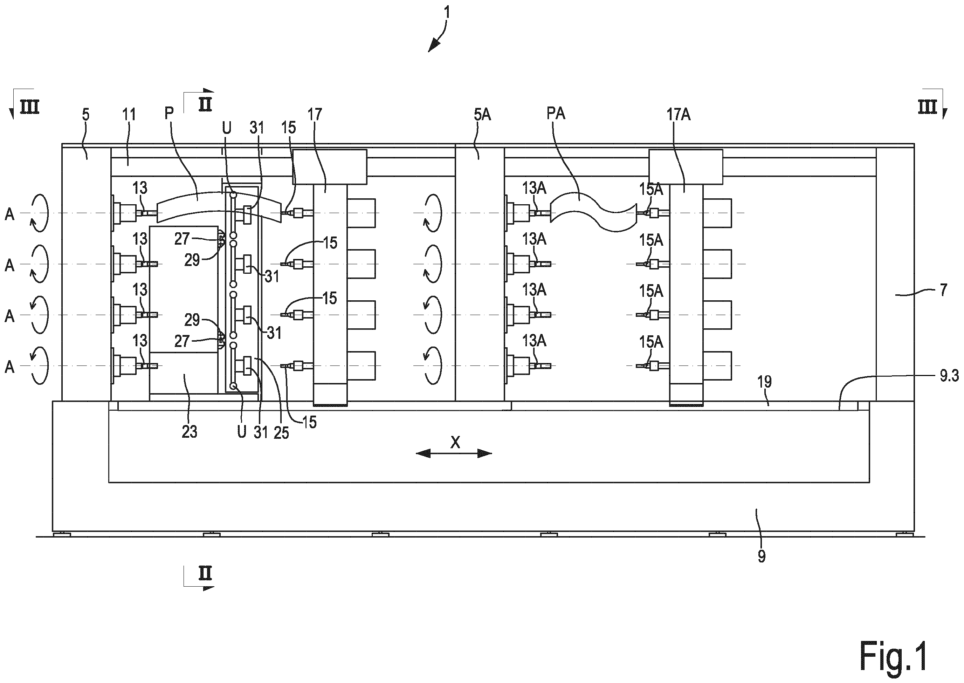

### Embodiment of Figures 1 to 4

A first embodiment of a multi-spindle lathe is illustrated in Figures 1 to 4. The multi-spindle lathe is indicated with 1 and comprises a support structure 3. The support structure 3 comprises a first upright 5 and a second upright 7 joined to a base 9 and to an upper horizontal guide 11. The first upright 5 forms a first element for supporting headstocks or tailstocks. More in particular, in the illustrated embodiment, a plurality of first headstocks 13 is carried on the upright 5. The first headstocks 13 are motorized. Each first headstock 13 is associated with a respective first tailstock 15. The first tailstocks 15 are carried by a movable support element 17, which allows the movement thereof in a direction parallel to a translation axis X to adjust the distance between the headstocks 13 and tailstocks 15. In the embodiment illustrated in Figures 1 to 4, the movable element has a vertical development and will be referred to as the first movable upright 17 hereinafter.

Each pair of headstock 13 and respective tailstock 15 forms a rotation member, for supporting and rotating a workpiece P, of a first series of rotation members. The pairs of first headstocks 13 and tailstocks 15 therefore form a first series of rotation members for the workpieces.

If the multi-spindle lathe is configured to machine very short workpieces, the rotation members could comprise just the motorized headstocks 13.

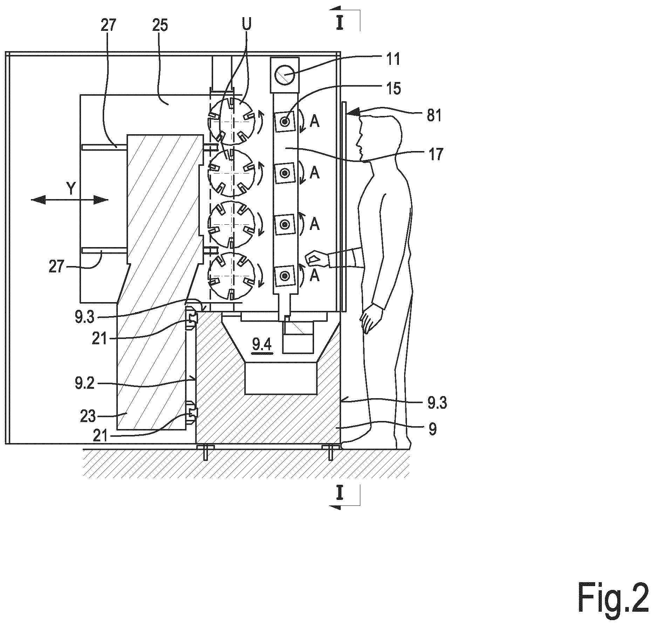

Each headstock 13 is coaxial to the respective tailstock 15. The rotation axes of the pairs of headstocks 13 and tailstocks 15 are indicated with A. Each headstock 13 is rotated around the respective axis A by means of a numerical control motor, not shown. The motors of the headstocks 13 are preferably controlled so that all the headstocks 13 rotate synchronously. Thereby, a plurality of tools U (Fig.2) carried by spindles 31 (described in more detail hereinafter) can synchronously and simultaneously machine all the workpieces P supported and rotated by the pairs of headstocks 13 and tailstocks 15. In the illustrated embodiment, the tools U, and therefore the spindles 31 carrying them, rotate around axes parallel to the rotation axes A of the headstocks 13 and tailstocks 15, i.e., horizontal axes parallel to a first numerical control translation axis X, along which the tools U move, and orthogonal to a second numerical control translation axis Y, along which the tools U move.

The shape and arrangement of the spindles 31 with the respective tools U, and of the first headstocks 13 and first tailstocks 15 is such that machining of the workpieces P occurs with the aforesaid orientation, i.e., with the rotation axes of the tools U parallel to the rotation axes A of the headstocks 13 and of the tailstocks 15, and thus to the rotation axes of the workpieces P being machined. In other words, the arrangement allows the workpieces P and the tools U to cooperate with one another while the axes A are parallel to the rotation axes of the tools U and of the spindles 31 carrying them.

The first movable upright 17 can be guided along the upper horizontal guide 11 and by lower adjustment guides 19, which can preferably be integral with the base 9 and which extend in the development direction of the base 9, i.e., parallel to the axis X. It is thereby possible to adjust the distance between all the first headstocks 13 and the respective first tailstocks 15 based on the length of the workpieces P. In some embodiments, not shown, the upper horizontal guide 11 can be omitted.

The base 9 has two side walls or faces 9.1 and 9.2 (see Fig.2) and an upper face 9.3. Guides for the translation of a first carriage 23 directly or indirectly carrying the spindles 31 and the relative tools U are fixed on one, the other, or both side faces. In the illustrated embodiment, guides 21 are applied on the side face 9.2 which extend parallel to the first horizontal translation axis X. The first carriage 23 is engaged to the guides 21. In the illustrated embodiment, the carriage 23 has the shape of an upright which is movable with respect to the base 9. In the illustrated embodiment, the first carriage 23 extends vertically beyond the maximum height of the base 9, i.e., beyond the surface or face 9. The first carriage 23 is provided with a numerical control movement along the first translation axis X, horizontal for moving along the guides 21. In the illustrated embodiment the side faces 9.1 and 9.2 of the base 9 are vertical and the guides 21 are attached to vertical surfaces. In other embodiments, not shown, one or both the side faces of the base may have a different shape. For instance, they may include vertical and horizontal surfaces or also inclined with respect to both the vertical and horizontal position. The guides 21 can in such case be attached to vertical portions or horizontal portions, or partly on vertical portions and partly on horizontal portions of the respective side face. A side face can include also a horizontal portion which represents a lateral extension of the upper face 9.3.

In the illustrated embodiment, the first carriage 23 carries a slide 25, which is movable along the second numerical control translation axis Y, which extends horizontally and orthogonally to the first translation axis X. Second guides 27 are provided for the slide 25 in order to allow the movement along the second translation axis Y, which in the embodiment of Figures 1 to 4 are integral with the slide 25 and engage in shoes 29 integral with the first carriage 23. A reverse arrangement can be provided, with shoes integral with the slide 25 and guides integral with the first carriage 23.

On the slide 25 the spindles 31 are carried, on which the tools U can be applied.

In the embodiment of Figs 1 to 4, the number of spindles 31 and the number of tools U is equal to the number of the first rotation members, i.e., of pairs of first headstocks 13 and first tailstocks 15. In the illustrated example, four pairs of headstocks and tailstocks 13, 15 and four spindles 31 are provided. The spindles 31 can be rotated simultaneously by means of motors in the same or different number with respect to the number of spindles 31. In the illustrated example two motors 33 are provided, each of which rotates two spindles 31.

Thanks to the movements on the numerical control translation axes X and Y, the tools U can perform numerically controlled movements along the axis X to machine each point of the workpieces P held between the first headstocks 13 and the first tailstocks 15. The numerically controlled movement along the translation axis Y allows the tools U to be approached and distanced from the side surface to be machined of the workpieces P held between the first headstocks 13 and the first tailstocks 15.

As mentioned above, during machining, i.e., when the tools U are in working contact with the workpieces P, the tools U rotate around axes parallel to the axes A of the headstocks 13 and tailstocks 15.

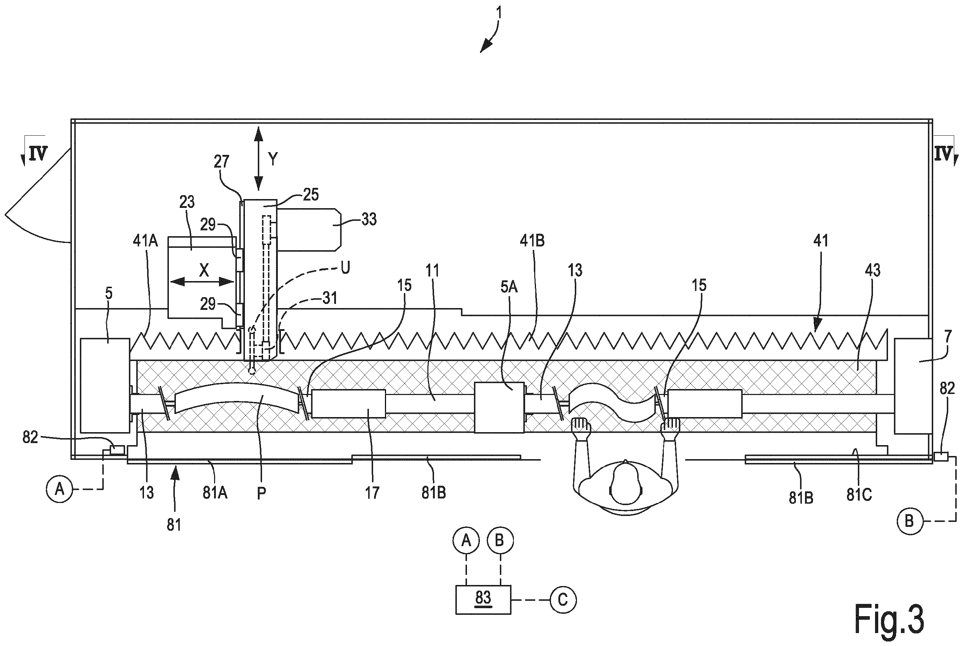

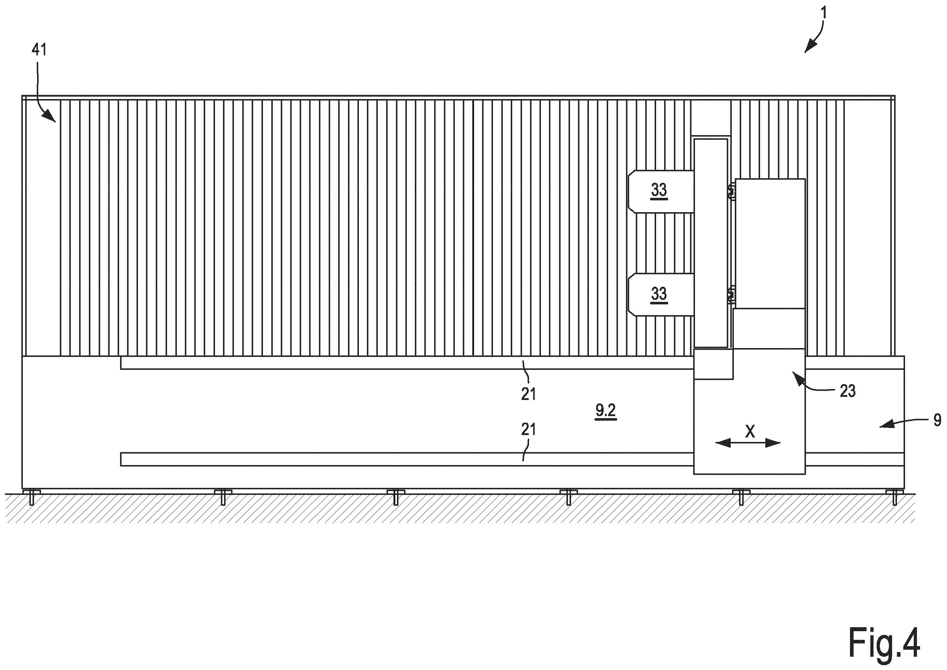

According to some advantageous embodiments, in order to obtain regular and efficient operation of the numerical control multi-spindle lathe 1, a protective wall 41 is provided, preferably a flexible wall, for example a bellows wall, visible in Figures 3 and 4 and omitted in the remaining figures for greater clarity. The wall 41 is divided into two portions 41A and 41B, connected directly or indirectly to the first carriage 23, so that the two wall portions 41A, 41B define a vertically developing slot for the passage of the slide 25 and in particular of the tools U, and for approaching and distancing the tools U with respect to the workpieces P.

By way of example, in the illustrated embodiment, the two wall portions 41A, 41B are bellows-shaped. Alternatively, flexible walls can be used which wind and unwind on rollers with a vertical axis, or still walls formed by a plurality of sectors sliding with respect to one another so as to telescopically lengthen and shorten.

The flexible wall 41 separates the working area of the tools U from the area in which the first carriage 23 moves. Thereby, falling of machining chips on the guides 21 and partly on the guides 27 is avoided or reduced. The chips remain confined in the front area of the flexible wall 41 and can be collected on a conveyor belt 43 (schematically indicated in Fig.3 and omitted in the remaining figures), supported by the base 9 and preferably movable with an evacuation movement parallel to the first translation axis X. The conveyor 43 can be housed in a cavity 9.4 (Fig.2) made on the upper face 9.3 of the base 9.

In other embodiments, chips removal can occur with another type of conveyor, for example a pneumatic suction conveyor, which can have suction apertures arranged on the upper part of the base 9.

Characteristically, the multi-spindle lathe 1 comprises a further, vertically extending second support element 5A, which is stationary with respect to the base 9 and a second element 17A with vertical development, movable with respect to the base 9, along the direction X. Hereinafter, the second stationary support element 5A is called second stationary upright 5A and the second movable element 17A is called second movable upright 17A. The second stationary upright 5A is connected to the upper horizontal guide 11 and the second movable upright 17A is slidable along the upper horizontal guide 11. As mentioned above, in some embodiments the upper horizontal guide 11 can be omitted.

In the illustrated embodiment, the second stationary upright 5A supports a series of second motorized headstocks 13A and the second movable upright 17B supports a series of second tailstocks 15A. The arrangement can be reversed, with tailstocks 15A on the second stationary upright 5A and motorized headstocks 13A on the second movable upright 17A.

Each pair formed by a second headstock 13A and a respective and coaxial second tailstock 15A forms a rotation member of the workpieces PA. The pairs of headstocks 13A and tailstocks 15A overall form a second series of rotation members 13A, 15A. Each rotation member 13A, 15A defines a rotation axis A of the workpieces PA. Preferably, for each rotation member 13, 15 of the first series of rotation members, a respective rotation member 13A, 15A of the second series of rotation members is provided, preferably coaxial to one another.

As can be seen in particular in Figs 1 and 3, the first series of rotation members 13, 15 and the second series of rotation members 13A, 15A are adjacent, i.e., side by side, and aligned along the direction of the axis X and of the respective guide 21. Thereby, the single group of tools U carried by the spindles 31 can selectively machine: workpieces P supported and rotated around the axes A by the rotation members 13, 15 of the first series of rotation members; or workpieces PA supported and rotated around the axes A by the rotation members 13A, 15A of the second series of rotation members.

In particular, in the operating condition shown in Figs. 1 and 3 the carriage 23 is located in a first working area, in which it can move with respect to the workpieces P supported and rotated by the headstocks 13 and by the tailstocks 15, while the area in which the headstocks 13A and the tailstocks 15A are located is free. An operator can therefore access the area where the headstocks 13A and tailstocks 15A are located to carry out the operations of: removing the workpieces PA machined in a previous machining cycle, and loading the workpieces PA to be machined. These operations are carried out while the multi-spindle lathe 1 is machining the workpieces P which are located between the headstocks 13 and tailstocks 15, avoiding the need for long downtimes of the multi-spindle lathe 1. This advantage also exists if the unloading and loading operations of the workpieces is performed wholly or partially in an automated manner by means of loading and unloading robots, for example.

To ensure greater safety for the operator, the multi-spindle lathe 1 can be provided with a closure and protection arrangement 81 which can completely or partially close the working area of the tools U in the front.

In the embodiment of Fig.3, the closure and protection arrangement 81 comprises a plurality of slidable panels 81A, 81B, 81C, 81D. The slidable panels can be opened and closed selectively, to allow access to the area of the first rotation members 13, 15 or to the area of the second rotation members 13A, 15A. In the condition illustrated in Fig.3, the panels 81A, 81B are closed, preventing access to the working area of the workpieces P supported and rotated by the first series of rotation members 13, 15. Conversely, the panel 81C is open allowing the operator to unload the machined workpieces PA and load workpieces PA onto the second series of rotation members 13, 15.

In advantageous embodiments, a plurality of detection devices 82 can be provided, for example a plurality of sensors, such as proximity, magnetic, capacitive, or other sensors, schematically shown in Fig.3. The detection devices 82 can be connected (see arrows A and B) with a control unit 83. The latter can be connected (arrow C) with the actuators which manage the numerically controlled movement of the first carriage 23 along the numerical control axis X. The control unit 83 can be adapted to limit the movements of the first carriage 23 so that the spindles 31 and the tools U carried by the first carriage 23 can move exclusively in a space protected by the closure and protection arrangement, based on the position of the closure panels 81A, 81B, 81C, 81D detected by the sensors 82. In other words, in the condition of Fig.3, for example, the control unit 83 prevents the carriage 23 from moving along the axis X, bringing the tools into the working area where the headstocks 13A and the tailstocks 15A are located, since the closure and protection arrangement is open in this area.

The described arrangement allows the multi-spindle lathe 1 to be kept working continuously, best exploiting the production capacity thereof, without the need to periodically interrupt the machining when the machining cycle of a group of workpieces P or PA ends.

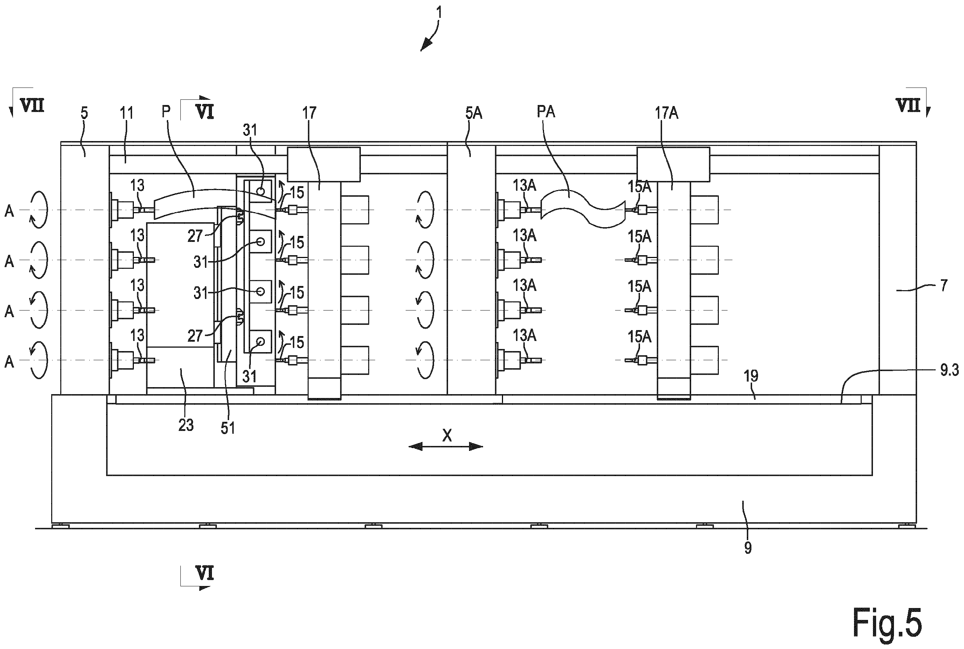

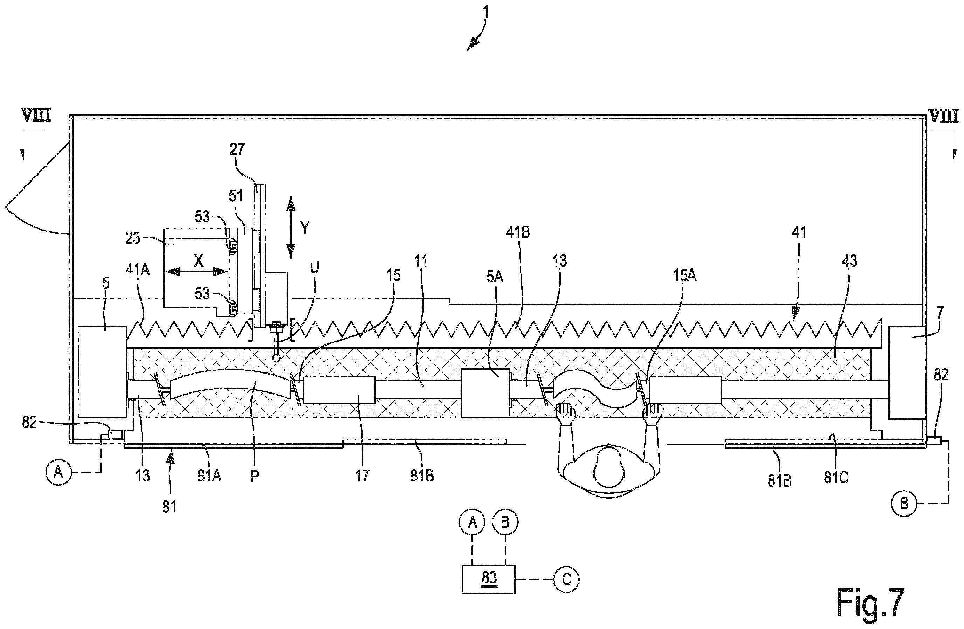

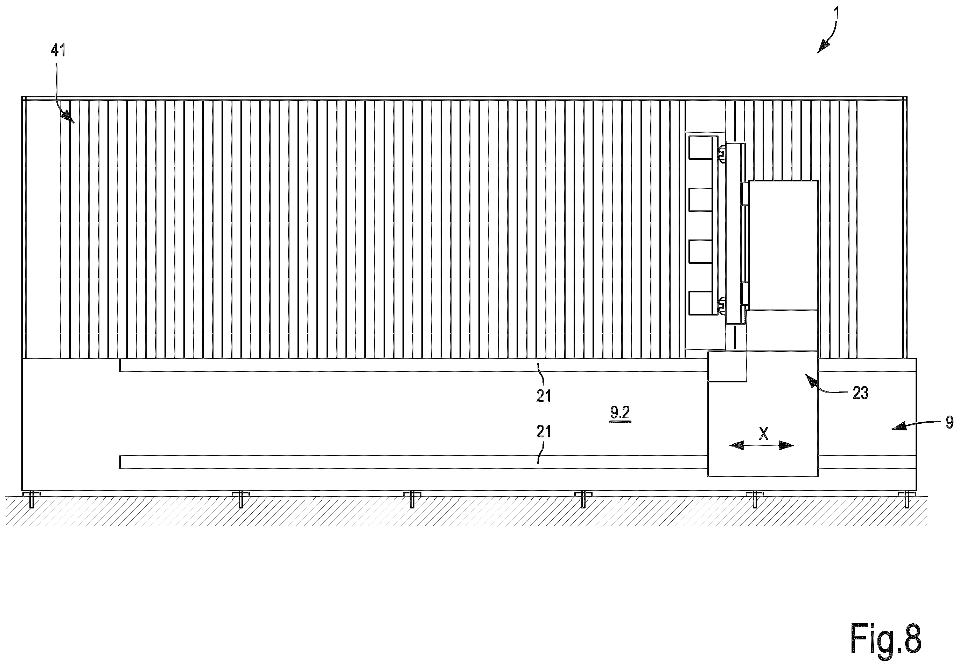

### Embodiment of Figures.5 to 8

A second embodiment of a numerical control multi-spindle lathe 1 is illustrated in Figs 5 to 8. The numerical control multi-spindle lathe 1 of Figs 5 to 8 has a structure which is largely the same as that of the multi-spindle lathe 1 of Figs 1 to 4. Equal parts in the two embodiments are indicated with the same reference numerals and will not be described again.

The main difference between the embodiment of Figs. 1 to 4 and the embodiment of Figs. 5 to 8 consists of the presence of a second carriage 51, movable according to a third translation axis Z, orthogonal to the first translation axis X and to the second translation axis Y, i.e., a vertical translation axis Z. More precisely, the third carriage 51 is interposed between the first carriage 23 and the slide 25. Instead of being engaged directly by means of its guides 27 to the first carriage 23, the slide 25 is engaged with the guides 27 to the second carriage 51. The latter is in turn engaged, by means of guides 53, to the first carriage 23, to move with a numerically controlled movement along the third vertical translation axis Z.

Thereby the spindles 31 and the tools U can move according to three numerical control translation axes X, Y, Z orthogonal to one another.

Furthermore, in the embodiment of Figs. 5 to 8, the tools U and the spindles 31 have rotation axes parallel to the axis Y and orthogonal to the axes X and Z and orthogonal to the rotation axes A of the headstocks 13, 13A and tailstocks 15, 15A. The movement along the axis Z allows the tools U to position themselves at variable heights with respect to the workpieces P, PA.

Also in this second embodiment there is a double series of rotation members (pairs of first headstocks 13 and first tailstocks 15; and respectively pairs of second headstocks 13A and second tailstocks 15A) side by side in sequence along the axis X to allow machining workpieces P mounted on the rotation members 13, 15 while workpieces PA are removed or loaded on the rotation members 13A, 15A, and vice-versa. Thereby, as in the previous exemplary embodiment, the exploitation of the production capacities of the multi-spindle lathe 1 is optimized.

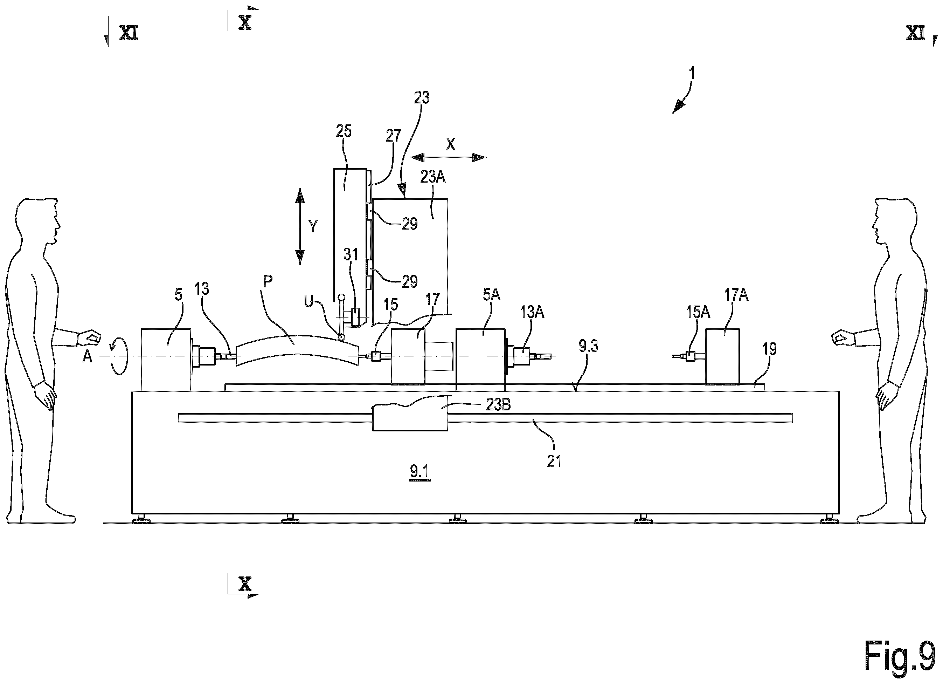

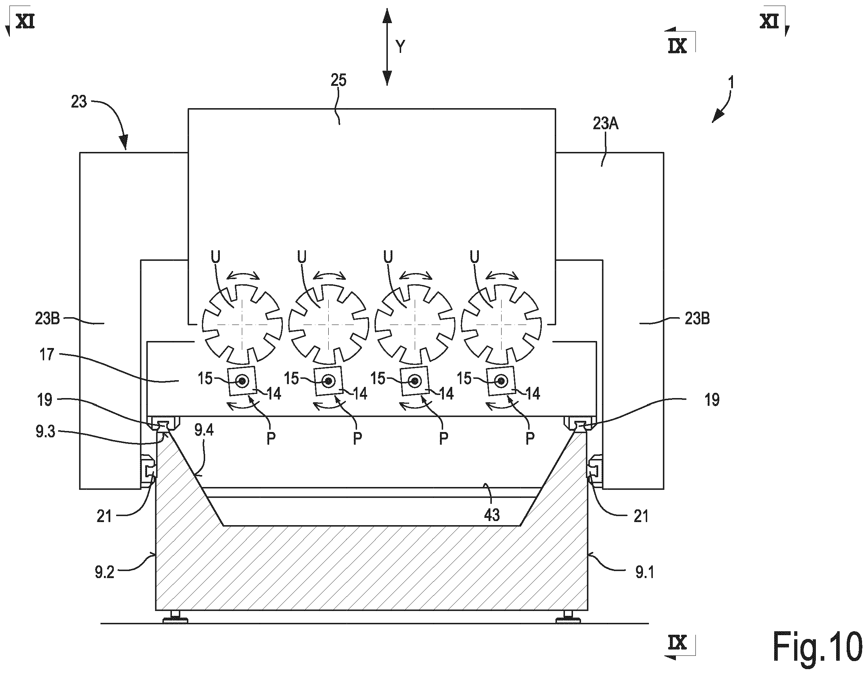

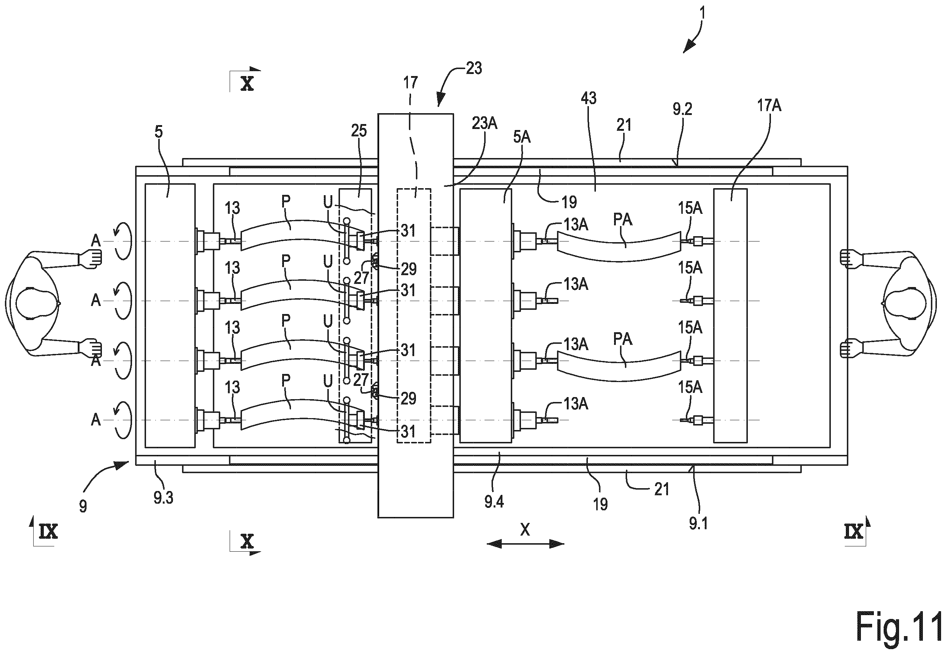

### Embodiment of Figures 9 to 11

A further embodiment of a numerical control multi-spindle lathe according to the present invention is illustrated in Figs. 9 to 11. In general terms, the embodiment of Figs. 9 to 11 mainly differs from the embodiments of Figs. 1 to 8 in that in the latter, the rotation axes A of the rotation members 13, 15; 13A, 15A and workpieces P, PA vertically overlap one another and are contained in a vertical plane. Vice-versa, in the embodiment of Figs. 9 to 11 the rotation axes of the workpieces and of the rotation members are contained on a horizontal plane.

In Figs. 9 to 11, like numerals are used to indicate elements or components generically equivalent to those of the embodiments of Figs. 1 to 8 .

The multi-spindle lathe 1 of Figs. 9 to 11 comprises a horizontally developing base 9 on which two series of rotation members of the workpieces and tools U are positioned, as well as relative spindles 31 which rotate the tools. U.

More in particular, in the embodiment of Figs. 9 to 11, each rotation member of a first series of rotation members comprises a first headstock 13 and a first tailstock 15 coaxial to one another along a rotation axis A. The first headstocks 13 are carried by a first element 5 stationary with respect to the base 9 and are therefore preferably stationary with respect to the base 9, i.e., they each rotate around their own horizontal axis A, but do not translate with respect to the base 9. The axes A lie on a horizontal plane.

Each first headstock 13 is rotated around the respective axis A by means of a numerical control motor, not shown. The motors of the first headstocks 13 are preferably controlled so that all the first headstocks 13 rotate synchronously. Thereby a plurality of tools U can work synchronously and simultaneously on all the workpieces P supported and rotated by the pairs of first headstocks and first tailstocks 13, 15.

In Figs. 9 to 11, the tools U, and the spindles 31 carrying them, are arranged so that machining of the workpieces P occurs by rotating the spindles 31 and the respective tools U around axes parallel to the rotation axes A of the first headstocks 13 and first tailstocks 15, i.e., horizontal axes parallel to a first translation axis X and orthogonal to a second translation axis Y, described in greater detail hereinafter, along which the tools U can move.

In advantageous embodiments, the tools U are movable along only two numerical control translation axes X and Y, which makes the structure of the machine tool simpler with respect to more complex existing structures, in which it is necessary to mutually translate the tools and workpieces along three numerical control translation axes parallel to one another.

In the embodiment of Figs 9 to 11, the first tailstocks 15 are carried by a first movable element 17 which allows the movement thereof in a direction parallel to the translation axis X to adjust the distance between the first headstocks 13 and the first tailstocks 15

In the embodiment of Figs. 9 to 11, the first movable element 17, on which the first tailstocks 15 are mounted, comprises a cross member orthogonal to the horizontal translation axis X and to the vertical translation axis Y. The first movable element 17 is engaged on adjustment guides 19, integral with the base 9 and extending in the longitudinal development direction of the base 9 and parallel to the horizontal translation axis X, as well as parallel to the rotation axes A of the pairs of first headstocks 13 and first tailstocks 15. It is thereby possible to adjust the distance between all the first headstocks 13 and the respective first tailstocks 15 based on the length of the workpieces P. The possibility of arranging the first headstocks 13 on the cross member constituting the movable element 17 and the first tailstocks 15 on the cross member constituting the first fixed element 5 is not excluded, although such a solution is less advantageous, since it requires arranging drive motors of the headstocks 13 on the movable element 17, instead of on the fixed element 5.

In order to be able to selectively machine a first series of workpieces P or a second series of workpieces PA with the same tools U carried by the spindles 31, in the embodiment of Figs. 9 to 11 a second series of rotation members 13A, 15A is provided, each comprising a second headstock 13A and a second tailstock 15A coaxial to one another. 5A indicates a second stationary element, i.e., an element fixed with respect to the base 9, which carries the second headstocks 13, while 17A indicates a second element which is movable along the guides 19 and which carries the second tailstocks 15A. The movement of the second movable element 17A along the guides 19 allows the mutual distance between the second headstocks 13A and the second tailstocks 15A to be adjusted. PA indicates workpieces supported by the rotation members of the second series of rotation members formed by the second headstocks 13A and by the second tailstocks 15A.

The base 9 can comprise two side walls or faces, respectively a face 9.1 and a face 9.2, opposite one another. The base 9 can also comprise an upper face 9.3. On the faces 9.1 and 9.2, which are generally parallel to one another, guides 21 can be applied which extend according to the first direction of translation, i.e., according to the first horizontal numerical control translation axis indicated by the double arrow X. Advantageously, a guide 21 can be provided on each of the two faces 9.1 and 9.2.

While in the embodiment shown in the drawings the side faces 9.1, 9.2 are illustrated as vertical surfaces, in other embodiments the side faces can be more complex and may include vertical and horizontal portions, or else portions which are inclined over the vertical and horizontal direction. The guides 21 can be attached to said vertical, horizontal or inclined portions of the side faces. The side faces may also include lateral extensions of the upper face 9.3.

In advantageous embodiments, to the guides 21 a gantry structure engages, which configures a first carriage or slide 23. The gantry structure 23 is movable with respect to the base 9 and will also be called briefly "carriage 23" or "first carriage 23". More exactly, the first carriage 23 can comprise a cross member 23A, which extends above the base 9 and transversely thereto, i.e., perpendicular to the side faces 9.1 and 9.2, perpendicular to the rotation axes A of the headstocks 13 and tailstocks 15 as well as of the headstocks 13A and tailstocks 15A, and placed above the horizontal plane on which the rotation axes A are contained.

The carriage 23 can also comprise two uprights 23B, which can be side by side with the faces 9.1 and 9.2 of the base 9, engaging, by means of suitable shoes, with the guides 21. The first carriage 23 is movable along the guides 21 according to the first horizontal translation axis X. The movement of the first carriage 23 along the axis X is a numerically controlled movement.

In some embodiments, the first carriage 23 carries a slide 25, which is movable along the second numerical control translation axis, represented by the double arrow Y. The second translation axis Y is vertical and orthogonal to the first translation axis X. To allow movement along the second translation axis Y, the slide 25 can be provided with second guides 27, which engage in shoes 29 integral with the first carriage 23, or vice-versa.

Carried on the slide 25 are spindles 31, on which tools U can be applied. The number of spindles 31 and the number of tools U can be equal to the number of pairs of headstocks 13 and tailstocks 15, as well as headstocks 13A and tailstocks 15A. The spindles 31 can be rotated simultaneously by means of motors in the same or different number with respect to the number of spindles 31.

The spindles 31 can be movable integrally with one another, all being directly mounted on the slide 25, so that the numerically controlled movement along the translation axis Y is performed simultaneously by all the tools U mounted on the spindles 31. This allows high productivity with a machine of simple structure, capable of machining a plurality of workpieces P or workpieces PA in parallel and simultaneously.

Thanks to the movements on the numerical control translation axes X and Y, the tools U can perform numerically controlled movements along the axis X to machine each point of the workpieces P held between the headstocks 13 and the tailstocks 15 or, alternatively, each point of the workpieces PA held between the headstocks 13A and the tailstocks 15A. The numerically controlled movement along the translation axis Y allows the tools U to be approached and distanced from the side surface to be mchined of the workpieces P held between headstocks 13 and tailstocks 15 and of the workpieces PA held between the headstocks 13A and the tailstocks 15A.

In a similar manner to what is described with reference to Figs. 1 to 8, the multi-spindle lathe 1 of Figs. 9 to 11 can also be provided with a closure and protection arrangement for closing a working area of the spindles 31 and of the tools U. The closure and protection arrangement can comprise: closure members of a first working area of the spindles 31, in which the spindles move to machine workpieces P mounted on the first series of rotation members 13, 15; and closure members of a second working area of the spindles 31, in which the spindles move to machine workpieces PA mounted on the second series of rotation members 13A, 15A. The closure members can advantageously be configured to make one of said first working area and second working area selectively accessible, and leave the other of said first working area and second working area inaccessible

In advantageous embodiments, the multi-spindle lathe 1 of Figs 9 to 11 can comprise a conveyor 43 for removing the chips produced during machining. The conveyor 43 can have an active upper branch which moves parallel to the axis X and can be housed in a seat or cavity 9.4 made in the upper face 9.3 of the base, between the guides 19.

Also in this embodiment, instead of a belt conveyor, a pneumatic suction conveyor can be provided to remove the chips.

As with the multi-spindle lathe 1 of Figs. 1 to 8, also in the embodiment of Figs. 9 to 11, thanks to the arrangement of a double rotation system of the workpieces, comprising the first series of rotation members 13, 15 and the second series of rotation members 13A, 15A, it is possible to: perform machining on a group of workpieces P kept in rotation by the first rotation members 13, 15 by means of the tools U, while an operator (or an automatic system) unloads machined workpieces PA from the rotation members 13A, 15A and loads new workpieces PA to be machined; or vice-versa.

Unloading of the machined workpieces PA and loading of new workpieces PA to be machined occurs in a time totally or partially overlapping the machining time of the workpieces P. At the next cycle, the machined workpieces P are unloaded and replaced with workpieces P to be machined, while the carriage 23 with the tools U has been translated into the working area of the workpieces PA supported by the headstocks 13A and by the tailstocks 15A and performs the machining cycle of the workpieces PA.

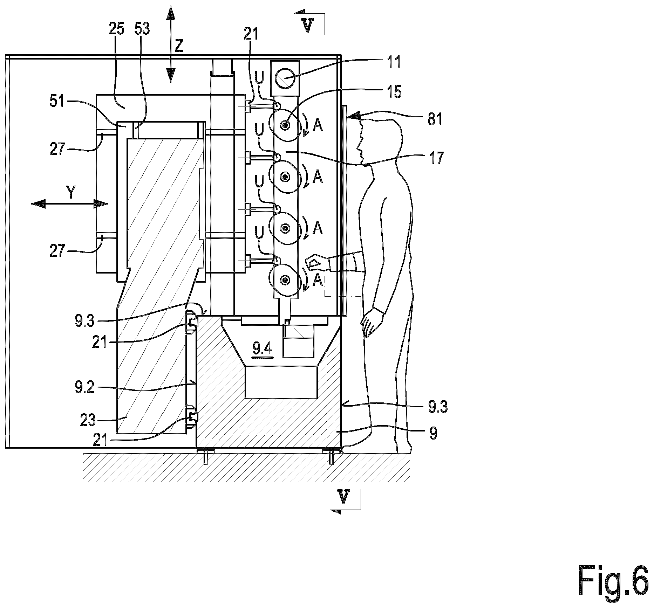

In the illustrated embodiments, a single structure is provided which carries the spindles of the tools. For example, in Figs. 1 to 8 a single carriage 23 is provided in the form of a movable upright. In the embodiment of Figs 9 to 11, a single carriage 23 is provided in the form of a movable gantry. The possibility of providing two or more carriages which are movable with respect to the base, each of which carries spindles for respective tools, is not excluded. The two or more carriages can be the same or different from one another. For example, in an embodiment similar to that illustrated in Figs. 1 to 8, there can be provided a carriage or upright 23 which is configured as in Figs. 1 to 5 and a second carriage or upright 23 configured as in Figs. 6 to 8.

## Claims

1. A numerical control multi-spindle lathe (1), comprising:
a base (9) extending along a first translation axis (X);
a first series of rotation members (13, 15) for workpieces (P), rotatable around respective rotation axes (A) parallel to the first translation axis (X); wherein each rotation member of the first series of rotation members (13, 15) comprises a first headstock (13) and a first tailstock (15), coaxial to one another and defining the respective rotation axis (A); wherein each first headstock (13) is motorized; and wherein the distance between the first headstocks (13) and the first tailstocks (15) is adjustable;
a first carriage (23) movable on first guides (21) associated with the base (9) and extending in the direction of the first translation axis (X); wherein the first carriage (23) is provided with a numerically controlled movement along the first translation axis (X);
a plurality of spindles (31) with parallel axes, carried by the first carriage (23) and adapted to receive and rotate tools (U) configured to simultaneously machine workpieces supported by the first series of rotation members (13, 15);
a second series of rotation members (13A, 15A) for workpieces (PA), rotatable around respective rotation axes (A); wherein the rotation axes (A) of the second series of rotation members (13A, 15A) are parallel to the rotation axes (A) of the first series of rotation members (13, 15); wherein each rotation member of the second series of rotation members (13A, 15A) comprises a second headstock (13A) and a second tailstock (15A), coaxial to one another and defining the respective rotation axis; wherein each second headstock (13A) is motorized; and wherein the distance between the second headstocks (13A) and the second tailstocks (15A) is adjustable;
wherein the first series of rotation members (13, 15) and the second series of rotation members (13A, 15A) are arranged in sequence along the first translation axis (X); and
wherein the first carriage (23) and the first guides (21) are configured to selectively machine: workpieces (P) mounted on the first series of rotation members (13, 15); and workpieces (PA) mounted on the second series of rotation members (13A, 15A).

2. The multi-spindle lathe according to claim 1, further comprising a closure and protection arrangement for closing a working area of the spindles (31) and tools (U) supported by the spindles (31); wherein the closure and protection arrangement comprises: closure members for a first working area of the spindles (31), in which the spindles move to machine workpieces (P) mounted on the first series of rotation members (13, 15); and closure members for a second working area of the spindles (31), wherein the spindles move to machine workpieces (PA) mounted on the second series of rotation members (13A, 15A); wherein the closure members are adapted to make one of said first working area and second working area selectively accessible, and to leave the other of said first working area and second working area inaccessible.

3. The multi-spindle lathe according to claim 2, comprising a control unit for the movements of the first carriage (23); wherein said control unit is interfaced with devices for detecting the position of the closure and protection arrangement, and is adapted to limit the movements of the first carriage (23) so that the spindles (31) and the tools (U) carried by the first carriage (23) can move exclusively in a space protected by the closure and protection arrangement, based on the position of said closure and protection arrangement detected by the detection device.

4. The multi-spindle lathe (1) according to one or more of the previous claims, wherein the spindles (31) comprise rotation axes parallel to the rotation axes (A) of the rotation members (13, 15; 13A, 15A).

5. The multi-spindle lathe (1) according to one or more of the previous claims, wherein:
the first tailstocks (15) are supported by a first element (17) movable parallel to the first translation axis (X) to adjust the mutual distance between the first headstocks (13) and the first tailstocks (15), and the first headstocks (13) are supported by a first element (5) which is fixed with respect to the base (9), or vice-versa;
the second tailstocks (15A) are supported by a second element (17A) movable parallel to the first translation axis (X) to adjust the mutual distance between the second headstocks (13A) and the second tailstocks (15A), and the second headstocks (13A) are supported by a second element (5A) which is fixed with respect to the base (9), or vice-versa; and
motors for the rotation of the first headstocks (13) are preferably supported by the first fixed element (5) and motors for the rotation of the second headstocks (13A) are preferably supported by the second fixed element (5A).

6. The multi-spindle lathe (1) according to claim 5, wherein the first movable element (17) and the second movable element (17A) have a vertical development and are guided on lower guides (19) integral with the base (9), parallel to the first guides (21) along which the first carriage (23) moves, and on upper guides (11), carried integral with the base (9).

7. The multi-spindle lathe according to one or more of the previous claims, further comprising a slide (25), supported by the first carriage (23) and movable with a numerically controlled movement with respect to the first carriage (23), by means of second guides (27), in the direction of a second translation axis (Y), orthogonal to the first translation axis (X); and wherein the spindles (31) are supported by the slide (25).

8. The multi-spindle lathe (1) according to claim 7, wherein the spindles (31) comprise rotation axes parallel to the second translation axis (Y).

9. The multi-spindle lathe according to one or more of the previous claims, wherein the rotation members of the first series of rotation members (13, 15) overlap one another in a vertical direction; and wherein the rotation members of the second series of rotation members (13A, 15A) overlap one another in a vertical direction.

10. The multi-spindle lathe according to one or more of the previous claims, wherein the rotation axes (A) of the rotation members lie on a vertical plane.

11. The multi-spindle lathe (1) according to claim 10, when dependent at least on claim 8, wherein the vertical plane containing the rotation axes (A) of the rotation members (13, 15; 13A, 15A) is parallel to the first translation axis (X) and orthogonal to the second translation axis (Y).

12. The multi-spindle lathe (1) according to one or more of the previous claims, wherein the base (9) comprises a system (43) for collecting chips generated from machining the workpieces (P), arranged on an upper face of the base (9).

13. The multi-spindle lathe (1) according to one or more of the previous claims, wherein the base (9) comprises a first side face (9.2) and a second side face (9.1); wherein the first side face and the second side face extend in the direction of the first translation axis (X); and wherein the first guides (21) are applied to the first side face (9.2), the first carriage (23) forming a movable upright, next to the first side face (9.2) of the base (9) and extending vertically beyond an upper surface of the base (9).

14. The multi-spindle lathe (1) at least according to claim 7, comprising a second carriage (51), interposed between the first carriage (23) and the slide (25); wherein the slide (25) is supported by the second carriage (51) and is movable with respect to the second carriage (51) along the second translation axis (Y); and wherein the second carriage (51) is supported by the first carriage (23) and is movable along a third translation axis (Z) with a numerically controlled translation movement, the third translation axis (Z) being orthogonal to the first translation axis (X) and to the second translation axis (Y).

15. The multi-spindle lathe (1) according to one or more of claims 1 to 5, 8, 9 and 13 to 15, wherein the rotation members of the first series of rotation members (13, 15) are side by side in a horizontal direction; and wherein the rotation members of the second series of rotation members (13A, 15A) are side by side in a horizontal direction.

16. The multi-spindle lathe (1) according to claim 15, wherein: the first carriage (23) forms a cross member engaged with the first guides (21) and extending horizontally and transversely to the rotation axes (A) of the first series of rotation members (13, 15) and of the second series of rotation members (13A, 15A); wherein preferably the cross member forming the first carriage (23) is positioned above a plane containing the rotation axes (A) of the first series of rotation members (13, 15) and of the second series of rotation members (13A, 15A).

17. The lathe (1) according to claim 16, further comprising a pair of uprights (23B) integral with the cross member (23A), engaged with the first guides (21) integral with the base, the cross member (23A) and the uprights (23B) forming a gantry structure movable along the first guides (21).
